(19) Europäisches Patentamt
European Patent Office
Office européen des brevets

(11) Publication number: 0 548 930 A1

(12) EUROPEAN PATENT APPLICATION

(21) Application number: 92121825.1

(22) Date of filing: 22.12.92

(51) Int. Cl.5: C08G 59/56, C08G 59/40, C08J 5/24, C08G 69/44

(30) Priority: 26.12.91 JP 344596/91

(43) Date of publication of application: 30.06.93 Bulletin 93/26

(84) Designated Contracting States: DE FR GB NL

(71) Applicant: TAKEDA CHEMICAL INDUSTRIES, LTD.
1-1, Doshomachi 4-chome
Chuo-ku, Osaka 541(JP)

(72) Inventor: Sano, Yasuo
6-36, Minoo 8-chome
Minoo, Osaka 562(JP)
Inventor: Mirosue, Yasuhiro
2-7, Yamadanishihara, Yuda, Ingawa-cho
Kawabe-gun, Hyogo 666-02(JP)

(74) Representative: von Kreisler, Alek et al
Patentanwälte von Kreisler Selting Werner
Deichmannhaus am Hauptbahnhof
W-5000 Köln 1 (DE)

(54) **Method of producing hot melt resin for prepreg.**

(57) A method of producing a hot melt resin for use in the production of a prepreg which comprises:

preparing a mixture of a bis(2-oxazoline) compound, a polyepoxy compound and an aromatic polyamine copmpound wherein when the amount of the bis(2-oxazoline) compound is indicated as [P] moles, and when the amounts of the polyepoxy compound and the aromatic polyamine compound are indicated as [E] and [M], respectively, wherein [E] = (2/m) x moles of the polyepoxy compound and [M] = (2/n) x moles of the aromatic polyamine compound wherein m and n are the functionality per molecule of the polyepoxy compound and the aromatic polyamine compound, respectively, then

$[M]/[E] = 3\text{-}8$, and
$[M] - [E] \leqq [P] \leqq 2 [M] - [E]$;

heating the mixture to a melt so that the polyepoxy compound and the aromatic polyamine compound react together;

adding a curing catalyst to the melt; and

cooling the melt to form a solid.

EP 0 548 930 A1

## Field of the Invention

This invention relates to a method of producing a hot melt resin suitable for use as a matrix resin of a prepreg, and a prepreg produced by use of such a hot melt resin.

## Background of the Invention

A prepreg is a molding material composed of reinforcing fibers impregnated with a thermosetting resin or a matrix resin, and is widely used for the production of fiber reinforced composite article such as a laminated molded article for use in sporting goods or leisure goods. A variety of resins are used as a matrix of prepreg, among which are, for example, epoxy resins, phenol resins, unsaturated polyester resins, thermosetting polyimide resins and isocyanate-bismaleimide resins (BT resins).

Meanwhile, there have been proposed a number of thermosetting resins which make use of bis(2-oxazoline) compounds as a component. For instance, a crosslinked polyaminoamide resin is formed by the reaction of bis(2-oxazoline) compound with an aromatic diamine compound, as disclosed in U.S. Patent No. 4,837,302, while a crosslinked epoxy-modified polyaminoamide resin is formed by the reaction of bis(2-oxazoline) compound with an aromatic diamine compound and a diepoxy compound, as disclosed in U.S. Patent No. 4,902,760.

A method of producing a prepreg by use of bis(2-oxazoline) compound is also known, as disclosed in Japanese Patent Application Laid-open No. 47848/1991. The method comprises dissolving a bis(2-oxazoline) compound in an organic solvent together with an aromatic diamine compound and a diepoxy compound to prepare a solution; impregnating reinforcing fibers with the solution; and then heating the reinforcing fibers to evaporate the solvent thereby to provide a prepreg.

However, a hot melt resin derived from a bis(2-oxazoline) compound has been hitherto not known which provides a prepreg for use in the production of a composite material composed of fiber reinforced crosslinked epoxy-modified polyaminoamide resin.

## Brief Summary of the Invention

It is an object of the invention to provide a method of producing a hot melt resin which provides a prepreg for use in the production of a composite material composed of fiber reinforced crosslinked epoxy-modified polyaminoamide resin. The use of such a hot melt resin readily provides such a prepreg as above without disadvantages attended by the use of organic solvents.

According to the invention, there is provided a method of producing a hot melt resin for use in the production of a prepreg which comprises:

preparing a mixture of a bis(2-oxazoline) compound, a polyepoxy compound and an aromatic polyamine copmpound wherein when the amount of the bis(2-oxazoline) compound is indicated as [P] moles, and when the amounts of the polyepoxy compound and the aromatic polyamine compound are indicated as [E] and [M], respectively, wherein [E] = (2/m) x moles of the polyepoxy compound and [M] = (2/n) x moles of the aromatic polyamine compound wherein m and n are the functionality per molecule of the polyepoxy compound and the aromatic polyamine compound, respectively, then

$[M]/[E] = 3\text{-}8$, and
$[M] - [E] \leqq [P] \leqq 2[M] - [E]$;

heating the mixture to a melt so that the polyepoxy compound and the aromatic polyamine compound react together;

adding a curing catalyst to the melt; and

cooling the melt to form a solid.

The prepreg of the invention is produced by impregnating reinforcing fibers with such a hot melt resin.

## Detailed Description of the Invention

The bis(2-oxazoline) compound used in the invention has the general formula (I):

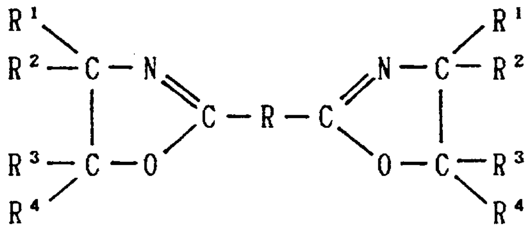

(I)

wherein R represents a C-C covalent bond or a divalent hydrocarbon group, preferably an alkylene, a cycloalkylene or an arylene, e.g., phenylene, and $R^1$, $R^2$, $R^3$ and $R^4$ independently represent hydrogen, an alkyl or an aryl. In the case where R is a C-C covalent bond, the bis(2-oxazoline) compound may be 2,2'-bis(2-oxazoline), 2,2'-bis(4-methyl-2-oxazoline), 2,2'-bis(5-methyl-2-oxazoline), 2,2'-bis(5,5'-dimethyl-2-oxazoline) and 2,2'-bis(4,4,4',4'-tetramethyl-2-oxazoline). In turn, in the case where R is a hydrocarbon group, the bis(2-oxazoline) compound may be 1,2-bis(2-oxazolin-2-yl)ethane, 1,4-bis(2-oxazolin-2-yl)butane, 1,6-bis-(2-oxazolin-2-yl)hexane, 1,8-bis(2-oxazolin-2-yl)octane, 1,4-bis(2-oxazolin-2-yl)cyclohexane, 1,2-bis(2-oxazolin-2-yl)benzene, 1,3-bis(2-oxazolin-2-yl)benzene, 1,4-bis(2-oxazolin-2-yl)benzene, 1,2-bis(5-methyl-2-oxazolin-2-yl)benzene, 1,3-bis(5-methyl-2-oxazolin-2-yl)benzene, 1,4-bis(5-methyl-2-oxazolin-2-yl)benzene and 1,4-bis(4,4'-dimethyl-2-oxazolin-2-yl)benzene. These may be used singly or as a mixture of two or more.

A mono(2-oxazoline) compound may be used together with the bis(2-oxazoline) compound. The mono-(2-oxazoline) compound used includes, for example, 2-methyloxazoline, 2,4-dimethyloxazoline, 2-ethyloxazoline, 2,5-dimethyloxazoline, 4,5-dimethyloxazoline, 2-phenyl-2-oxazoline, 2-(m-tolyl)oxazoline, 2-(p-tolyl)-oxazoline and 5-methyl-2-phenyloxazoline.

Among the above, 2,2'-bis(2-oxazoline), 1,3-bis(2-oxazolin-2-yl)benzene and 1,4-bis(2-oxazolin-2-yl)-benzene are particularly preferred.

The polyepoxy compound used in the invention is an epoxy compound which has at least two epoxy groups in the molecule, namely which has a functionality m (number of epoxy groups in the molecule) of two or more. Usually a diepoxy compound is preferably used as such a polyepoxy compound. The diepoxy compound used includes, for example, bisphenol type epoxy resins such as bisphenol A-diglycidyl ether, bisphenol F-diglycidyl ether or tetrabromobisphenol A-diglycidyl ether; and diglycidyl ester type epoxy resins such as diglycidyl phthalate, diglycidyl terephthalate, diglycidyl tetrahydrophthalate, diglycidyl hexahydrophthalate, diglycidyl p-hydroxybenzoate or dimer acid diglycidyl esters. The polyepoxy compound may be used singly or as a mixture.

The diepoxy compound may be wholly or partly replaced by a polyepoxy compound of a functionality of three or more. When such a polyepoxy compound, for example, a triepoxy compound, is used, two thirds of one mole of the compound is regarded as one mole of a diepoxy compound, as will be generally set forth hereinafter.

The aromatic polyamine compound used is an aromatic compound which has at least two amino groups in the molecule, namely which has a functionality n (number of amino groups in the molecule) of two or more, and may be a mononuclear or a polynuclear compound. Usually an aromatic diamine compound is preferred as such an aromatic polyamine compound.

There may be used as such an aromatic diamine compound, for example, o-, m- or p-phenylenediamine, 2,3-, 2,4- or 2,5-tolylenediamine, 4,4'-diaminobiphenyl, 3,3'-dimethoxy-4,4'-diaminobiphenyl, 4,4'-diaminodiphenylmethane, 4,4'-diaminotriphenylmethane, 3,3'-diethyl-4,4'-diaminodiphenylmethane, 3,3'-dimethyl-4,4'-diaminobiphenyl, 2,2',5,5'-tetrachloro-4,4'-diaminobiphenyl, 4,4'-methylenebisaniline, 4,4'-methylenebis(2-chloroaniline), 2,2'-bis[4-(4-aminophenoxy)phenyl]propane, 1,3-bis-(4-aminophenoxy)benzene, 1,3-bis(3-aminophenoxy)benzene, 3,4'-diaminodiphenylether, 4,4'-diaminodiphenylsulfide or 4,4'-bis(aminophenyl)amine.

The aromatic diamine compound may be wholly or partly replaced by an aromatic polyamine compound of a functionality of three or more. The aromatic diamine compound may also be partly replaced by an aromatic monoamine compound which has a single amino group in the molecule or a functionality of one. The aromatic monoamine compound includes, for example, aniline, N-methylaniline, N-ethylaniline, o-toluidine, m-toluidine, p-toluidine, $\alpha$-naphthylamine, $\beta$-naphthylamine and benzylamine.

When such an aromatic polyamine compound of a functionality of three or more, for example, an aromatic triamine compound, is used, two thirds of one mole of the compound is regarded as one mole of an aromatic diamine compound. When an aromatic monoamine compound is used, two moles of the compound is regarded as one mole of an aromatic diamine compound, as will be generally set forth hereinafter.

The curing catalyst used in the invention is an oxazoline ring-opening polymerization catalyst. The oxazoline ring-opening polymerization catalyst is already known, as described in, for example, Poymer J., Vol. 3, No. 1, pp. 35-39 (1972) and Polymerization Reaction Treatize Course 7, Ring-Opening Polymerisation II, pp. 159-164, Kagaku Dojin (1973).

The curing catalyst used in the invention includes, for example, a strong acid, a sulfonic acid ester, a sulfuric acid ester, a Lewis acid or an organic halide which contains at least one halogen atom bonded to an aliphatic or an alicyclic carbon, preferably an alkyl or an alkylene carbon, in the molecule.

More specifically, the strong acid includes an oxoacid such as phosphorous acid, sulfuric acid or nitric acid; a hydroacid such as hydrochloric acid, hydrobromic acid, hydroiodic acid or hydrogen sulfide; and an organic strong acid such as an aryl phosphorous acid, e.g., phenyl phosphorous acid; an alkanesulfonic acid, e.g., methanesulfonic acid or ethanesulfonicacid; an arenesulfonic acid, e.g., benzenesulfonic acid, p-toluenesulfonic acid, dodecylbenzenesulfonic acid, naphthalene-α-sulfonic acid or naphthalene-β-sulfonic acid; sulfanilic acid or phenylphosphonic acid. The strong acid may be used as it is, or may be used in the form of a salt of the aromatic polyamine compound.

The sulfonic acid ester includes an alkyl arenesulfonate, such as methyl p-toluenesulfonate or ethyl p-toluenesulfonate. The sulfuric acid ester includes a dialkyl sulfuric acid such as dimethylsulfuric acid or diethylsulfuric acid.

The Lewis acid usable includes, for example, aluminum chloride, stannic chloride, vanadium chloride, vanadyl chloride, boron trifluoride, and the like.

Preferred examples of the organic halide as defined before are a monohalo- or polyhaloalkane such as methyl iodide, butyl chloride, butyl bromide, butyl iodide, n-hexyl bromide, octyl chloride, octyl bromide, lauryl bromide, stearyl bromide, allyl bromide, 1,1,2,2-tetrabromoethane, 1,2,3-tribromopropane or 1,4-dibromobutane.

Other examples of the organic halide are mono- or polyhalomethylbenzenes, e.g., benzyl bromide or p,p'-dichloromethylbenzene. The organic halide usable further includes a halogenized fatty acid ester such as ethyl α-bromopropionate or ethyl α-bromoisobutylate. Cyclohexyl halides such as cyclohexyl bromide or chloride are also usable as the catalyst.

A further specific example of catalyst is a hydrohalide of an aromatic monoamine compound. The aromatic monoamine compound may be a mononuclear or a polynuclear compound, and may be exemplified by aniline; N-alkyl anilines such as N-methylaniline or N-ethylaniline; toluidines such as o-, m- or p-toluidine; xylidines such as 2,4- or 2,5-xylidine; or naphthylamines such as α-naphthylamine or β-naphthylamine. The hydrohalide may be a hydrochloride, hydrobromide or hydroiodide.

Among the curing catalysts above mentioned, a polyhaloalkane of two to four carbons which contains two to four bromine atoms therein is especially preferred, such as 1,1,2,2-tetrabromoethane, 1,2,3-tribromopropane or 1,4-dibromobutane. Aniline hydrobromide is also a preferred curing catalyst.

According to the invention, the hot melt resin is preferably produced by heating a mixture of a bis(2-oxazoline) compound, a polyepoxy compound and an aromatic polyamine copmpound to form a melt so that the polyepoxy compound and the aromatic polyamine compound react together as the first step, and then, preferably after the completion of the reaction, by adding a curing catalyst to the melt, and admixing thoroughly the mixture, followed by cooling the mixture to form a solid, as the second step.

On account of the reaction between the polyepoxy compound and the aromatic polyamine copmpound effected in the first stage, the resultant hot melt resin has a viscosity suitable to impregnate reinforcing fibers therewith when it is heated and melted. The mixture contains no curing catalyst in the first step so that there takes place substantially no reaction between the bis(2-oxazoline) compound and the aromatic polyamine compound under heating of the mixture.

The start of the reaction in the first step between the polyepoxy compound and the aromatic polyamine compound in the mixture is indicated by rise of the temperature of the mixture due to the reaction heat generated. The completion of the reaction is indicated by fall of the temperature of the mixture, whereupon a curing catalyst is added to and mixed with the mixture, and the mixture is cooled and solidified, thereby to provide a hot melt resin of the invention.

However, the hot melt resin of the invention may also be produced by preparing a mixture of a polyepoxy compound and an aromatic polyamine copmpound and heating the mixture so that they melt and react together as the first step, and then by adding a bis(2-oxazoline) compound and a curing catalyst to

the melt, and admixing the mixture thoroughly, followed by cooling the mixture to form a solid, as the second step.

For the production of hot melt resin, all the materials, a bis(2-oxazoline) compound, polyepoxy compound and aromatic polyamine copmpound are used in a specific rate of amount so that the resultant hot melt resin has a viscosity suitable to impregnate reinforcing fibers therewith.

When a bis(2-oxazoline) compound is used in an amount of [P] mole, and when a polyepoxy compound and an aromatic polyamine compound have functionality of m and n, respectively, the polyepoxy compound and the aromatic polyamine compound are used in an amount of [E] and [M], respectively, wherein [E] = (2/m) x moles of the polyepoxy compound (namely, the value of (2/m) multiplied by the amount in terms of moles of the polyepoxy compound) and [M] = (2/n) x moles of the aromatic polyamine compound (namely, the value of (2/n) multiplied by the amount in terms of moles of the aromatic polyamine compound), so that the following relation is satisfied:

[M]/[E] = 3-8, and
[M] - [E] ≦ [P] ≦ 2[M] - [E].

Firstly, when the ratio [M]/[E] is smaller than three, there may undesirably take place a crosslinking reaction when the mixture is heated and melted so that a polyepoxy compound and an aromatic polyamine compound are reacted together, and hence gelation of the mixture.

Secondly, it is necessary that a mixture of polyepoxy compound and an aromatic polyamine compound is heated and melted so that they react to produce their oligomers and the mixture has an increased viscosity, and it is also necessary that no solid of such a monomeric compound as the bis(2-oxazoline) compound or aromatic polyamine compound used separates out from the mixture when the mixture is cooled to normal temperatures, so that the resultant hot melt resin can be suitably used as a matrix of a prepreg. Accordingly, when the ratio of [M]/[E] is too large, the amount of the polyepoxy compound is relatively too small, and the reaction of the aromatic polyamine compound with the polyepoxy compound fails to increase the viscosity of the mixture to a necessary level. It might also happen that the aromatic polyamine compound separates out from the mixture when the mixture is cooled as above.

The reason for the second requisite is as follows. A bis(2-oxazoline) compound reacts with both the aromatic polyamine compound and polyepoxy compound in the same manner. It is necessary that at least two amino hydrogens of the aromatic polyamine compound react with a bis(2-oxazoline) compound and a polyepoxy compound to provide a crosslinked epoxy-modified polyaminoamide resin. On the other hand, an aromatic polyamine compound has amino hydrogens twice the number of amino groups in the molecule at which the polyamine compound can react with a bis(2-oxazoline) compound and polyepoxy compound. Thus, an aromatic diamine compound has four amino hydrogens or four reaction sites where the diamine compound can react with a bis(2-oxazoline) compound and polyepoxy compound. Therefore, an aromatic polyamine compound is used in such an amount as fulfils the relation below in relation to the total amount of the bis(2-oxazoline) compound and polyepoxy compound used:

[M] ≦ [P] - [E] ≦ 2[M],

the relation being the same as the second requisite as above mentioned.

As hereinbefore mentioned, a diepoxy compound and an aromatic diamine compound may be preferably used as a polyepoxy and an aromatic polyamine compound, respectively. Both the diepoxy compound and the aromatic diamine compound have a functionality of two, so that the amounts [E] and [M] are the amounts in terms of moles of the diepoxy compound and the aromatic diamine compound, respectively, in the same manner as [P]. Thus, when a mixture of a bis(2-oxazoline) compound, a diepoxy compound and an aromatic diamine compound is prepared so that the above requisites are met, the mixture is heated and melted to cause the reaction between the diepoxy compound and the aromatic diamine compound, a curing catalyst is added to the melt, and the melt is cooled to form a solid, thereby to provide a hot melt resin of the invention.

The amount of the curing catalyst used may be dependent on curing conditions of prepreg which has been prepared by use of a hot melt resin of the invention, however, it is usually in the range of about 0.5-10% by weight, preferably 1-7% by weight, based on the weight of the resin materials, namely, the total amount of bis(2-oxazoline) compound, polyepoxy compound and aromatic polyamine compound.

The hot melt resin thus obtained readily provides a prepreg by a conventional method. Namely, the prepreg of the invention may be produced by melting the hot melt resin as produced by the method set forth herein, and then impregnating reinforcing fibers with the resin. The prepreg may be suitably used for

the production of a composite material composed of fiber reinforced crosslinked epoxy-modified polyaminoamide resin. By way of example, the hot melt resin is coated on a separate paper to form a film, and then the film may be laminated on reinforcing fibers to impregnate the fibers therewith.

The reinforcing fiber may be such as used in the production of ordinary fiber reinforced resins, and may be exemplified by inorganic fibers such as glass fibers, carbon fibers, quartz fibers, ceramic fibers, zirconia fibers, boron fibers, tungsten fibers, molybdenum fibers, steel fibers, beryllium fibers and asbestos fibers; natural fibers such as cotton, flax, hemp, jute or sisal hemp; and heat-resistant synthetic fibers such as polyamide fibers or polyester fibers. In order to improve the adhesion to the resin, the reinforcing fiber may be treated in advance with, for example, boranes, silanes or aminosilanes. The reinforcing fiber may be used singly or in combination of two or more, and may be used in the form of unidirectional continuous fibers, cloth, roving, roving cloth or chopped strand mat.

The amount of the reinforcing fiber in prepregs may be dependent on melt viscosity of the resin materials, reinforcing fibers used and their form, and use of the resultant reinforced resin as final products among others, however, it may be usually in the range of about 3-95% by weight, preferably about 5-80% by weight, based on the hot melt resin.

The thus obtained prepreg may be heated usually to a temperature of about 120-180 °C for a period of 5-60 minutes to provide a fiber reinforced composite. The prepreg may be suitably used for the production of, for example, sporting or leisure goods such as frames of tennis or badminton rackets, baseball or soft ball bats, shafts of golf clubs or fishing rods, or structural materials such as parts used in automobiles, air crafts or electric appliances.

The invention will now be described in detail with reference to examples, however, the invention is not limited thereto.

## EXAMPLE 1

A mixture of 864 g (4 mole) of 1,3-bis(2-oxazolin-2-yl)benzene, 792 g (4 mole) of 4,4'-diaminodiphenylmethane and 370 g (1 mole) of epoxy resin (Epikote 828 available from Yuka-Shell Epoxy K.K.) was melted in an oil bath at 140 °C with stirring, whereupon the reaction of 4,4'-diaminodiphenylmethane and epoxy resin took place and the viscosity of the melted mixture increased. The mixture was cooled and then again heated to 70 °C, whereupon an amount of 61 g of aniline hydrobromide powder was added to the mixture, and the mixture was fully mixed and cooled to solidify to a hot melt resin.

The hot melt resin was heated to 70 °C and coated on a separate paper by a conventional method to form a resin film. The film was then laminated at 100 °C on unidirectional carbon fibers (Pyrofil TR-30 available from Mitsubishi Rayon K.K) to provide a unidirectional prepreg.

A unidirectional molding material of prepregs in twenty layers was prepared, and compression-molded under conditions of a temperature of 140 °C for 40 minutes to provide a plate of fiber reinforced resin having a thickness of 2 mm. The plate was found to have an interlayer shear strength of 11.5 kgf/mm$^2$ and a 0 °- directional bending strength of 170 kgf/mm$^2$.

## EXAMPLE 2

A mixture of 325 g (1.5 mole) of 1,3-bis(2-oxazolin-2-yl)benzene, 298 g (1.5 mole) of 4,4'-diaminodiphenylmethane and 119 g (0.5 mole) of epoxy resin (Epikote 807 available from Yuka-Shell Epoxy K.K.) was melted in an oven at 140 °C. The mixture reached a temperature of 130 °C, and then heated for a further period of 40 minutes. Then, the mixture was cooled to 90 °C, whereupon an amount of 15 g of 1,2,3-tribromopropane was added to the mixture, and the mixture was fully mixed and cooled to provide a hot melt resin.

The hot melt resin was heated to 80 °C and coated on a separate paper by a conventional method to form a resin film. The film was then laminated at 80 °C on unidirectional carbon fibers (Treca available from Toray K.K.) to provide a unidirectional prepreg.

A unidirectional molding material of prepregs in eighteen layers was prepared, and compression-molded at a temperature of 140 °C to provide a plate of fiber reinforced resin having a thickness of 2 mm and a resin content of 28%. The plate was found to have an interlayer shear strength of 10.5 kgf/mm$^2$ and a 0 °-directional bending strength of 180 kgf/mm$^2$.

EXAMPLE 3

A mixture of 468 g (2.17 mole) of 1,3-bis(2-oxazolin-2-yl)benzene, 264 g (1.33 mole) of 4,4'-diaminodiphenylmethane, 170 g (0.33 mole) of 3,3'-diethyl-4,4'-diaminodiphenylmethane and 185 g (0.5 mole) of epoxy resin (Epikote 828 available from Yuka-Shell Epoxy K.K.) was melted in an oven at 140 °C. The mixture reached a temperature of 130 °C, and then heated for a further period of 30 minutes. Then, the mixture was cooled to 80 °C, whereupon an amount of 11 g of 1,4-dibromobutane was added to the mixture, and the mixture was fully mixed and cooled to provide a hot melt resin.

The hot melt resin was heated to 80 °C and coated on a separate paper by a conventional method to form a resin film. The film was then laminated at 80 °C on unidirectional carbon fibers (Besfite HTA-D12K available from Toho Rayon K.K.) to provide a unidirectional prepreg.

A unidirectional molding material of prepregs in eighteen layers was prepared, and compression-molded at a temperature of 140 °C to provide a plate of fiber reinforced resin having a thickness of 2 mm and a resin content of 29%. The plate was found to have an interlayer shear strength of 11.3 $kgf/mm^2$ and a 0 °-directional bending strength of 196 $kgf/mm^2$.

EXAMPLE 4

A mixture of 432 g (2.0 mole) of 1,3-bis(2-oxazolin-2-yl)benzene, 317 g (1.6 mole) of 4,4'-diaminodiphenylmethane and 191 g (0.2 mole) of epoxy resin (Epikote 1001 available from Yuka-Shell Epoxy K.K.) was melted in an oven at 140 °C. The mixture reached a temperature of 130 °C, and then heated for a further period of 40 minutes. Then, the mixture was cooled to 90 °C, whereupon an amount of 19 g of 1,2,3-tribromopropane was added to the mixture, and the mixture was fully mixed and cooled to provide a hot melt resin.

The hot melt resin was heated to 70 °C and coated on a separate paper by a conventional method to form a resin film. The film was then laminated at 70 °C on unidirectional carbon fibers (Besfite HTA-D12K available from Toho Rayon K.K.) to provide a unidirectional prepreg.

A unidirectional molding material of prepregs in eighteen layers was prepared, and compression-molded at a temperature of 140 °C to provide a plate of fiber reinforced resin having a thickness of 2 mm and a resin content of 28%. The plate was found to have an interlayer shear strength of 8.5 $kgf/mm^2$ and a 0 °-directional bending strength of 165 $kgf/mm^2$.

## Claims

**1.** A method of producing a hot melt resin for use in the production of a prepreg which comprises:

preparing a mixture of a bis(2-oxazoline) compound, a polyepoxy compound and an aromatic polyamine copmpound wherein when the amount of the bis(2-oxazoline) compound is indicated as [P] moles, and when the amounts of the polyepoxy compound and the aromatic polyamine compound are indicated as [E] and [M], respectively, wherein [E] = (2/m) x moles of the polyepoxy compound and [M] = (2/n) x moles of the aromatic polyamine compound wherein m and n are the functionality per molecule of the polyepoxy compound and the aromatic polyamine compound, respectively, then

$[M]/[E] = 3\text{-}8$, and
$[M] - [E] \leqq [P] \leqq 2[M] - [E]$;

heating the mixture to a melt so that the polyepoxy compound and the aromatic polyamine compound react together;
adding a curing catalyst to the melt; and
cooling the melt to form a solid.

**2.** The method as claimed in claim 1 wherein the polyepoxy compound is a diepoxycompound and the aromatic polyamine compound is an aromatic diamine compound.

**3.** The method as claimed in claim 1 wherein the curing catalyst is a polyhaloalkane of two to four carbons which contains two to four bromine atoms therein.

**4.** The method as claimed in claim 3 wherein the polyhaloalkane is 1,1,2,2-tetrabromoethane, 1,2,3-tribromopropane or 1,4-dibromobutane.

**5.** The method as claimed in claim 1 wherein the curing catalyst is a hydrohalide of an aromatic monoamine compound.

**6.** The method as claimed in claim 5 wherein the hydrohalide is aniline hydrobromide.

**7.** A method of producing a prepreg which comprises:

preparing a mixture of a bis(2-oxazoline) compound, a polyepoxy compound and an aromatic polyamine copmpound wherein when the amount of the bis(2-oxazoline) compound is indicated as [P] moles, and when the amounts of the polyepoxy compound and the aromatic polyamine compound are indicated as [E] and [M], respectively, wherein [E] = (2/m) x moles of the polyepoxy compound and [M] = (2/n) x moles of the aromatic polyamine compound wherein m and n are the functionality per molecule of the polyepoxy compound and the aromatic polyamine compound, respectively, then

[M]/[E] = 3-8, and
$[M] - [E] \leqq [P] \leqq 2\,[M] - [E]$;

heating the mixture to a melt so that the polyepoxy compound and the aromatic polyamine compound react together;
adding a curing catalyst to the melt;
cooling the melt to form a hot melt resin; and
impregnating reinforcing fibers with the hot melt resin.

**8.** The method as claimed in claim 7 wherein the polyepoxy compound is a diepoxycompound and the aromatic polyamine compound is an aromatic diamine compound.

**9.** The method as claimed in claim 7 wherein the catalyst is a polyhaloalkane of two to four carbons which contains two to four bromine atoms therein.

**10.** The method as claimed in claim 9 wherein the polyhaloalkane is 1,1,2,2-tetrabromoethane, 1,2,3-tribromopropane or 1,4-dibromobutane.

**11.** The method as claimed in claim 7 wherein the curing catalyst is a hydrohalide of an aromatic monoamine compound.

**12.** The method as claimed in claim 7 wherein the hydrohalide is aniline hydrobromide.

**13.** A prepreg as produced by:

preparing a mixture of a bis(2-oxazoline) compound, a polyepoxy compound and an aromatic polyamine copmpound wherein when the amount of the bis(2-oxazoline) compound is indicated as [P] moles, and when the amounts of the polyepoxy compound and the aromatic polyamine compound are indicated as [E] and [M], respectively, wherein [E] = (2/m) x moles of the polyepoxy compound and [M] = (2/n) x moles of the aromatic polyamine compound wherein m and n are the functionality per molecule of the polyepoxy compound and the aromatic polyamine compound, respectively, then

[M]/[E] = 3-8, and
$[M] - [E] \leqq [P] \leqq 2[M] - [E]$;

heating the mixture to a melt so that the polyepoxy compound and the aromatic polyamine compound react together;
adding a curing catalyst to the melt;
cooling the melt to form a hot melt resin; and
impregnating reinforcing fibers with the hot melt resin.

**14.** The prepreg as claimed in claim 13 wherein the polyepoxy compound is a diepoxy compound and the aromatic polyamine compound is an aromatic diamine compound.

**15.** The prepreg as claimed in claim 13 wherein the catalyst is a polyhaloalkane of two to four carbons which contains two to four bromine atoms therein.

16. The prepreg as claimed in claim 15 wherein the polyhaloalkane is 1,1,2,2-tetrabromoethane, 1,2,3-tribromopropane or 1,4-dibromobutane.

17. The prepreg as claimed in claim 13 wherein the curing catalyst is a hydrohalide of an aromatic monoamine compound.

18. The prepreg method as claimed in claim 13 wherein the hydrohalide is aniline hydrobromide.

European Patent Office

# EUROPEAN SEARCH REPORT

Application Number

EP 92 12 1825

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 313 994 (TAKEDA CHEMICAL INDUSTRIES,LTD.)<br>* claims 1-3 * | 1,2,7,8 | C08G59/56<br>C08G59/40<br>C08J5/24 |
| A | * page 4, line 49 - page 5, line 9; claims 4-20 * | 3-6,9-18 | C08G69/44 |
| D | & US-A-4 902 760 | | |
| A | US-A-4 829 134 (SAKAMOTO ET AL.)<br>* claims 1-12 * | 1-18 | |

TECHNICAL FIELDS SEARCHED (Int. Cl.5)

C08G
C08J

The present search report has been drawn up for all claims

| Place of search | Date of completion of the search | Examiner |
|---|---|---|
| THE HAGUE | 31 MARCH 1993 | GLANDDIER A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)